# DEMANDE DE BREVET EUROPEEN

(11) **EP 1 847 823 A2**
(43) Date de publication de la demande: **24.10.2007**
(21) Numéro de dépôt: 07104881.3
(22) Date de dépôt: 26.03.2007
(51) Int. Cl.: G01M 17/02, G01L 5/22, G01L 5/16

(54) **Pneumatique pourvu d'un capteur placé entre la nappe carcasse et la gomme intérieure.**

(30) Priorité: 30.03.2006 FR 0602805
(71) Demandeur: Societe de Technologie Michelin STM, 63000 Clermont-Ferrand (FR); Michelin Recherche et Technique, 1763 Granges-Paccot (CH)
(72) Inventeur: Bertrand, David, 25000, BESANCON (FR)
(74) Mandataire: Le Cam, Stéphane Georges Elie

(57) **Abrégé**

L'invention concerne un pneumatique (10) comportant une gomme intérieure (11), au moins une nappe carcasse (12) et un capteur de contraintes (20), le capteur de contraintes étant placé entre la nappe carcasse et la gomme intérieure.

## Description

### Domaine de l'invention

La présente invention concerne les pneumatiques pourvus de capteurs de contraintes et plus particulièrement le positionnement de capteurs de contraintes dans la structure d'un pneumatique.

### Arrière-plan technologique

Les systèmes d'assistance et de contrôle présents dans les véhicules ne cessent d'évoluer dans le but d'accroître confort, performances et sécurité. Par conséquent, de nouveaux besoins en mesures de différents paramètres apparaissent. Certains de ces paramètres peuvent être déterminés grâce à l'équipement des pneumatiques avec des capteurs. En particulier, des grandeurs liées à la sollicitation des pneumatiques (flèche du pneumatique, torseur des efforts au centre roue, proximité de la limite d'adhérence, ...) peuvent être accessibles par des mesures de déformation et de contraintes dans le pneumatique.

Dans le domaine des mesures liées au pneumatique, on peut distinguer deux sous-domaines : la mesure de grandeurs liées à l'air interne et la mesure de grandeurs liées à l'architecture et aux matériaux constitutifs du pneumatique.

La mesure de grandeurs liées à l'air interne, comme par exemple la pression et la température de l'air interne, ne nécessite pas l'établissement d'une interface particulière entre le capteur et le pneumatique. Il suffit de pourvoir un support destiné à attacher le capteur (et éventuellement d'autres composantes électroniques) au pneumatique tout en le protégeant des sollicitations mécaniques par un découplage adapté.

Il en est autrement de la mesure de grandeurs liées à l'architecture et aux matériaux constitutifs du pneumatique, comme par exemple les déformations du pneumatique ou les contraintes qui se développent à un endroit donné. Dans ce cas, la qualité de l'interface mécanique entre le capteur utilisé et le milieu environnant est capital. Il est notamment possible de régler la part des déformations ou des contraintes transmises au capteur par un choix judicieux de la structure géométrique et des matériaux du support établissant l'interface.

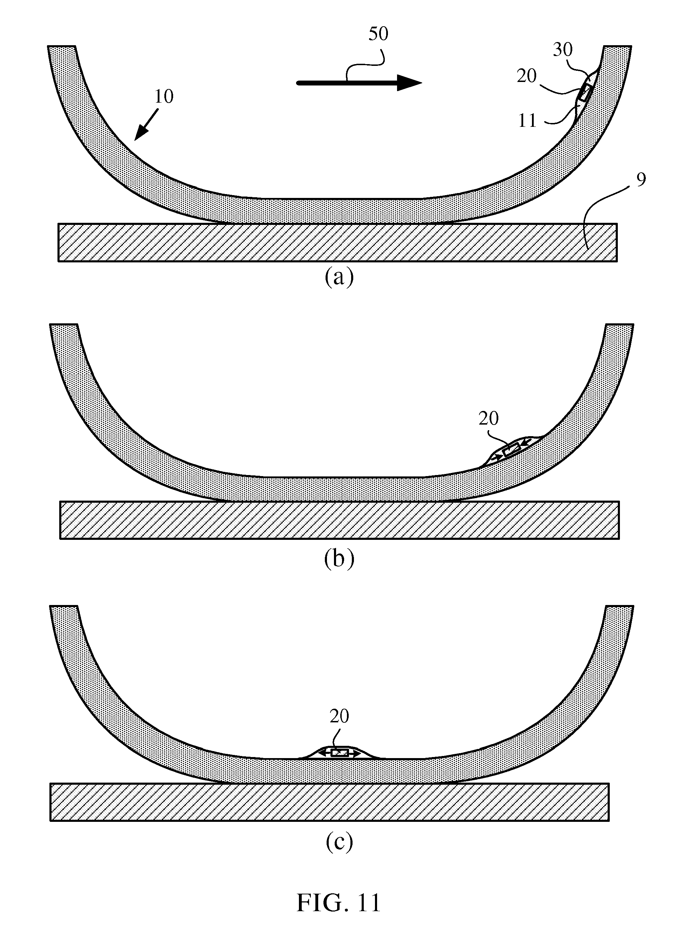

Il est connu d'implanter un capteur dans l'un des éléments constituant un pneumatique. Le document US 2003/0056579 décrit un pneumatique comportant, dans une zone non soumise à l'usure, un capteur de type « clou ». Les figures 16 et 17 de ce document suggèrent l'implantation du capteur dans la partie inférieure du flanc, près du bourrelet du pneumatique (figure 16) et dans la zone reliant le flanc du pneumatique à la bande de roulement (figure 17). Le document US 2004/0158441 enseigne l'implantation d'un capteur de contraintes dans la proximité de la tringle (voir en particulier les figures 11 et 12).

### Description de l'invention

La présente invention a pour objet d'optimiser l'emplacement d'un capteur de contraintes à l'intérieur d'un pneumatique.

Cet objectif est atteint par un pneumatique comportant une gomme intérieure, au moins une nappe carcasse et un capteur de contraintes, le pneumatique étant caractérisé en ce que le capteur de contraintes est placé entre la nappe carcasse et la gomme intérieure.

Par « gomme intérieure » on entend ici une masse de mélange caoutchouteux (par exemple, à base de Butyle) délimitée par une surface interne en contact avec le gaz intérieur au pneumatique et une surface externe en contact avec une nappe carcasse du pneumatique ; cette gomme intérieure assure l'étanchéité d'un pneumatique sans chambre à air (« tubeless »).

Jusque là, il n'a pas été proposé de placer un capteur dans la zone entre la nappe carcasse et la gomme intérieure, et pour cause : la personne du métier aurait tendance à éviter un emplacement du capteur dans la proximité immédiate de la gomme intérieure, car toute blessure de cette gomme mince, par exemple lors de la conformation du pneumatique, aurait un impact très significatif sur l'étanchéité du pneumatique.

L'emplacement du capteur entre la nappe carcasse et la gomme intérieure s'avère néanmoins particulièrement avantageux, pour les raisons suivantes. Premièrement, la fabrication est plus aisée et nécessite moins d'opérations que la mise en place d'un emplâtre (« patch »), ce qui se traduit par un temps de fabrication plus court et un coût moins important. Deuxièmement, cet emplacement procure une bonne protection de la fonction vis-à-vis des agressions extérieures. En étant placée du côté intérieur de la nappe carcasse, le capteur est protégé par le flanc extérieur et par la nappe elle-même. Troisièmement, le capteur est bien protégé vis-à-vis des agressions venant de l'intérieur du pneumatique (humidité, oxydation...), car il est placé derrière la gomme intérieure dont la propriété première est d'être étanche. Enfin, les variantes d'architectures qui peuvent être retenues pour concevoir un pneumatique affectent très peu cet emplacement. Ainsi, les solutions développées et validées pour une architecture donnée sont en général réutilisables sur d'autres architectures.

Signalons que l'emplacement entre la nappe carcasse et la gomme intérieure n'est pas l'endroit où la personne du métier, cherchant à protéger un capteur des agressions provenant de l'intérieur (humidité, oxydation) et de l'extérieur du pneumatique (chocs, humidité, oxydation), placerait naturellement le capteur. Elle envisagerait plutôt un emplacement dans le bourrage tringle, car cet emplacement augmente encore la quantité de matière séparant le capteur de l'intérieur du pneumatique.

Un pneumatique selon l'invention peut notamment comporter un capteur de contraintes comprenant une tige rigide reliée à une membrane sensiblement plane et déformable, la membrane comportant des moyens de détection d'une déformation de la membrane, la tige étant couplée mécaniquement à la nappe carcasse et/ou à la gomme intérieure du pneumatique. Pour la détection de la déformation de la membrane et la mesure de force associée, on se reportera avantageusement à la description du document US 6,666,079**.**

Le couplage mécanique de la tige à la nappe carcasse et/ou à la gomme intérieure du pneumatique peut être réalisé par l'intermédiaire d'une quantité de matériau qui comble l'espace entre la nappe carcasse, la gomme intérieure et le capteur. De façon préférentielle, on utilisera un matériau caoutchouteux. La présence d'un tel matériau permet d'optimiser le couplage mécanique entre le capteur et le pneumatique, en particulier par un choix judicieux de la rigidité du matériau. Un matériau caoutchouteux ayant une rigidité entre 2 et 15 MPa pour 10 % d'allongement s'avère bien adapté à la plupart des applications.

Selon un mode de réalisation particulier, le matériau peut présenter un gradient de rigidité. La rigidité du matériau dans les zones proches de la gomme intérieure et de la nappe carcasse peut avantageusement être choisie de manière à être proche de la rigidité de la composition caoutchouteuse avec laquelle il est en contact (gomme intérieure ou nappe carcasse) ou intermédiaire entre la rigidité de la gomme intérieure et de la nappe carcasse (typiquement entre 2 à 6 MPa pour 10 % d'allongement). La rigidité du matériau dans les zones proches du capteur sera alors avantageusement supérieure à la rigidité de la gomme intérieure et à la rigidité de la nappe carcasse et choisie de manière à se rapprocher de la rigidité du capteur.

Selon un mode de réalisation de l'invention, la normale à la membrane du capteur est parallèle au plan de la nappe carcasse, ce qui permet de mesurer des contraintes de cisaillement dans ce plan. De façon avantageuse, elle est, soit orientée de façon parallèle à une direction radiale, c'est-à-dire comprise dans un plan comprenant l'axe de rotation du pneumatique, soit orientée de façon perpendiculaire à une telle direction radiale.

Le capteur peut notamment être placé dans une zone de bourrelet ou sur un flanc du pneumatique.

Le capteur peut également être placé sous le sommet du pneumatique ; on orientera alors de préférence le capteur de façon à orienter la normale au plan de la membrane du capteur dans la direction circonférentielle du pneumatique, ce qui permet notamment d'accéder au cisaillement sous le sommet, dans un plan parallèle à la surface de roulement du pneumatique, et à la compression dans la direction d'avancement du pneumatique. Par « surface de roulement », on entend la surface formée par les points de la bande de roulement du pneumatique qui entrent en contact avec le sol lorsque le pneumatique roule.

Un autre mode de réalisation de l'invention consiste à orienter la membrane du capteur de sorte qu'elle soit parallèle à la nappe carcasse et à la gomme intérieure, ce qui permet la lecture d'une valeur représentative de la pression de gonflage du pneumatique.

L'invention sera mieux comprise grâce à la description des dessins selon lesquels :
- la figure 1 représente une vue en perspective partielle d'un pneumatique pourvu d'un capteur ;
- la figure 2 représente un capteur 20 de contraintes tridimensionnel, de type « clou » ;
- les figures 3 et 4 représentent des modes de réalisation de l'invention ;
- la figure 5 représente le positionnement du capteur par rapport à la nappe carcasse selon un premier mode de réalisation préférentiel ;
- la figure 6 représente le positionnement du capteur sur le pneumatique selon ce premier mode de réalisation préférentiel ;
- la figure 7 représente un pneumatique soumis à deux types de sollicitations ;
- la figure 8 représente un pneumatique selon l'invention avant et après l'application d'une charge ;
- la figure 9 représente le positionnement du capteur par rapport à la nappe carcasse selon un deuxième mode de réalisation préférentiel ;
- la figure 10 représente le positionnement du capteur sur le pneumatique selon ce deuxième mode de réalisation préférentiel ;
- la figure 11 représente le positionnement du capteur selon un troisième mode de réalisation préférentiel.

Ces figures sont schématiques et données dans un but purement illustratif; elles n'ont aucun caractère limitatif.

### Description de modes de réalisation

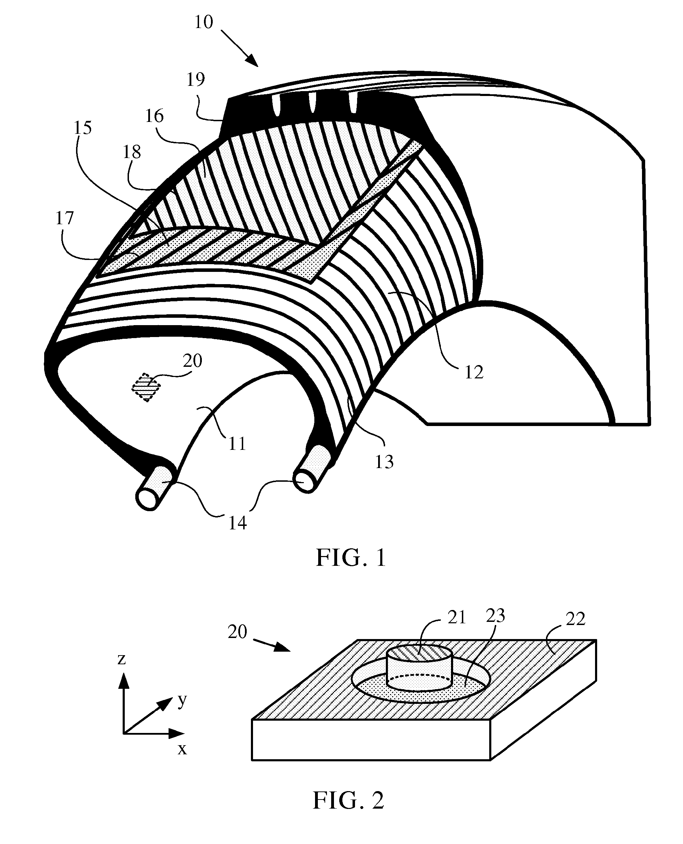

La figure 1 représente schématiquement un pneumatique 10 traditionnel, comprenant une gomme intérieure 11 en gomme imperméable, une nappe carcasse 12 constituée de fils 13 enrobés de mélange caoutchouteux (c'est-à-dire de composition de caoutchouc comportant au moins un élastomère et une charge), de renforts circonférentiels 14 qui maintiennent le pneumatique 10 sur la jante (non représentée), une armature de sommet comprenant deux nappes 15, 16. Chacune des nappes 15 et 16 est renforcée par des fils 17 et 18 qui sont inclinés par rapport à un plan perpendiculaire à l'axe de rotation du pneumatique. Une bande de roulement 19 est posée sur les nappes 15 et 16 ; c'est cette bande de roulement 19 qui assure le contact du pneumatique 10 avec la route. Le pneumatique est équipé d'un capteur 20 qui est placé entre la gomme intérieure 11 et la nappe carcasse 12 et dont la structure est illustrée dans les figures suivants. Le capteur 20 est représenté en pointillé, car il est couvert par la gomme intérieure 11.

La figure 2 représente schématiquement un capteur 20 de contraintes tridimensionnel, de type « clou ». Il se compose d'une tige rigide 21 et d'une tête 22 qui comporte une membrane 23 déformable et sensiblement plane capable de se déformer lorsque la tige rigide 21, reliée ici au centre de la membrane 23, est sollicitée par une force ou un moment ou encore lorsque la structure complète du dispositif de mesure est sollicitée par une accélération, la tige 21 formant alors une masse sismique.

La membrane 23 est équipée de jauges de déformations qui lui permettent de délivrer des signaux proportionnels aux contraintes appliquées sur elle :
- la contrainte normale à la membrane 23 (suivant z);
- la contrainte de cisaillement suivant x (σ_{xz}) ;
- la contrainte de cisaillement suivant y (σ_{yz}).
Le capteur ainsi décrit mesure simultanément ces trois composantes de contrainte. (Signalons que le système cartésien (x, y, z) de la figure 2 n'a été choisi que pour illustrer les contraintes accessibles. Par la suite, x, y et z désigneront des directions liées à un repère local du pneumatique, x désignant la direction circonférentielle, y la direction axiale et z la direction perpendiculaire aux directions x et y.) Pour la détection de la déformation de la membrane 23 et la mesure de force associée, on se reportera avantageusement à la description du document US 6,666,079.

Dans ce qui suit, on considérera un tel capteur, mais d'autres capteurs de contrainte peuvent être utilisés dans un pneumatique selon l'invention.

Le capteur 20 destiné à mesurer des contraintes locales dans le pneumatique 10 et à les relier à des déformations du pneumatique 10 est intégré dans le pneumatique 10 lors de sa fabrication. De façon préférentielle, le capteur est placé en surépaisseur entre la nappe carcasse 12 et la gomme intérieure 11.

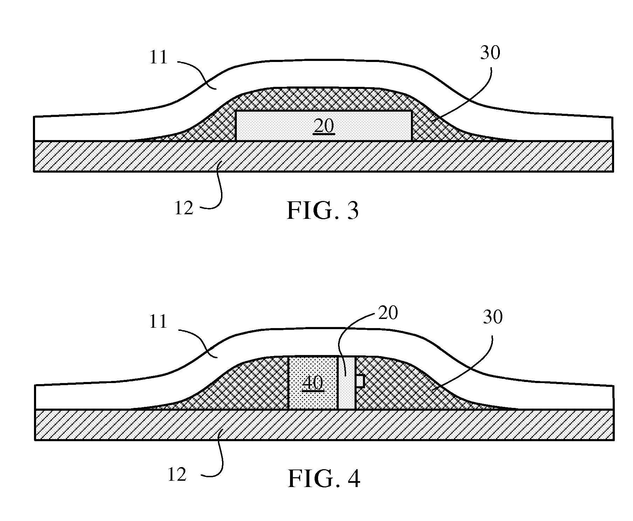

La figure 3 représente un mode de réalisation particulier dans lequel le capteur 20 est placé entre la nappe carcasse 12 et la gomme intérieure 11. Il est très fréquemment souhaitable ou nécessaire de combler l'espace entre la nappe carcasse 12 et la gomme intérieure 11 à proximité du capteur 20 en ajoutant une quantité de matériau 30, ayant des caractéristiques adaptées, dans le but d'optimiser le couplage mécanique entre le capteur 20 et le pneumatique 10. En particulier, la rigidité du matériau et la forme de cette quantité de matériau 30 sont définies de manière à :
- Eviter l'accumulation de contraintes en certains points particuliers (formes effilées),
- Eviter la formation de bulles d'air lors de la fabrication du pneumatique 10, et
- Régler le niveau de contraintes transmis au capteur.
Un matériau très rigide peut transmettre des contraintes importantes alors qu'un matériau souple permettra de limiter le niveau de contraintes s'exerçant sur la membrane 23 du capteur 20.

La figure 4 représente schématiquement un mode de réalisation où le capteur 20 (ici associé à un module de traitement 40 qui lui est accolé) est monté dans une position telle que la normale à sa membrane 23 est parallèle au plan de la nappe carcasse 12. Dans ce mode de réalisation, l'ajout de la quantité de matériau 30 est nécessaire pour obtenir une transmission au capteur 20 des contraintes qui s'exercent sur le pneumatique 10. Pour une même déformation du pneumatique 10, la contrainte perçue par le capteur 20 est au premier ordre proportionnelle à la rigidité du matériau retenu pour combler l'espace entre la nappe carcasse 12 et la gomme intérieure 11 à proximité du capteur 20.

Un capteur comme celui présenté précédemment permet de mesurer des grandeurs physiques différentes en fonction de son emplacement et de son orientation. Différents modes de réalisation et leurs utilisations possibles seront présentés dans les paragraphes qui suivent.

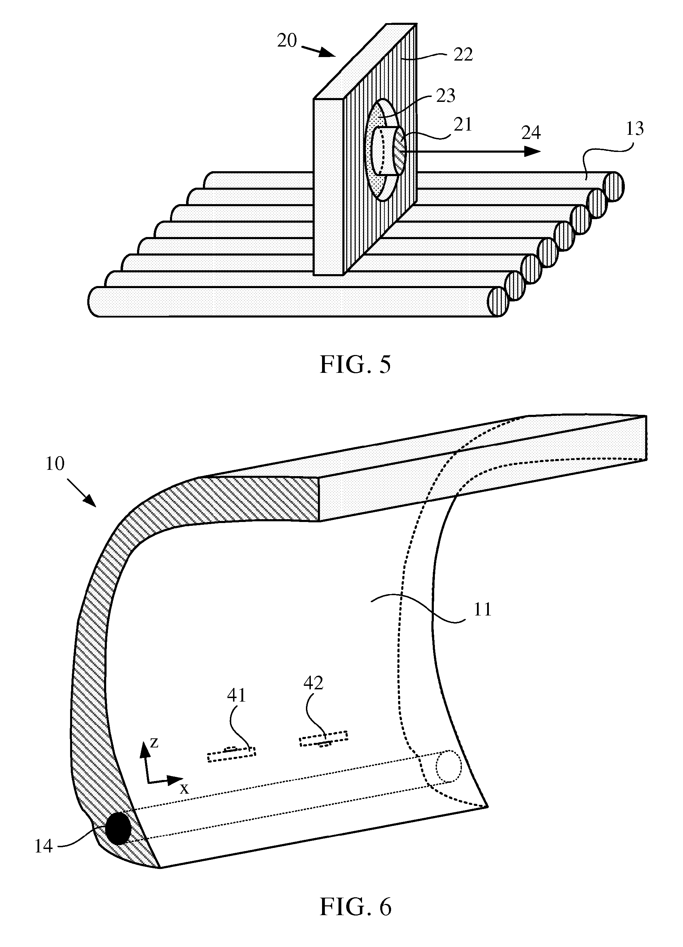

Dans un premier mode de réalisation préférentiel, le capteur 20 est placé dans une zone de bourrelet ou sur un flanc du pneumatique 10 et orienté de façon à ce que la normale au plan de la membrane 23 soit orientée de façon radiale, c'est-à-dire parallèle à une direction comprise dans un plan comprenant l'axe de rotation du pneumatique 10. La figure 5 représente schématiquement cette situation pour un pneumatique 10 à structure radiale. La normale au plan de la membrane 23 (indiquée par la flèche 24) est alors parallèle aux fils 13 de la nappe carcasse 12. Les deux positionnements qui correspondent à cette orientation (et qui donnent des résultats comparables) sont représentées à la figure 6 : pour le capteur 42, la membrane est tournée vers l'axe de rotation du pneumatique 10 ; pour le capteur 41, elle est tournée dans la direction opposée.

Ce mode de réalisation préférentiel permet notamment de mesurer la déradialisation et la flexion du flanc du pneumatique 10.

La déradialisation du pneumatique 10 peut être mesurée par l'intermédiaire du cisaillement xz (σ_{xz}) de la membrane 23 du capteur 20. Lorsque un pneumatique 10 de type radial est soumis à une sollicitation en charge ou en couple moteur/freineur, le pneumatique se déforme et les câbles 13 de la nappe carcasse s'éloignent de leur orientation radiale. Cela se traduit par un cisaillement entre la direction radiale et la direction circonférentielle, et ce cisaillement peut être détecté par le capteur 20.

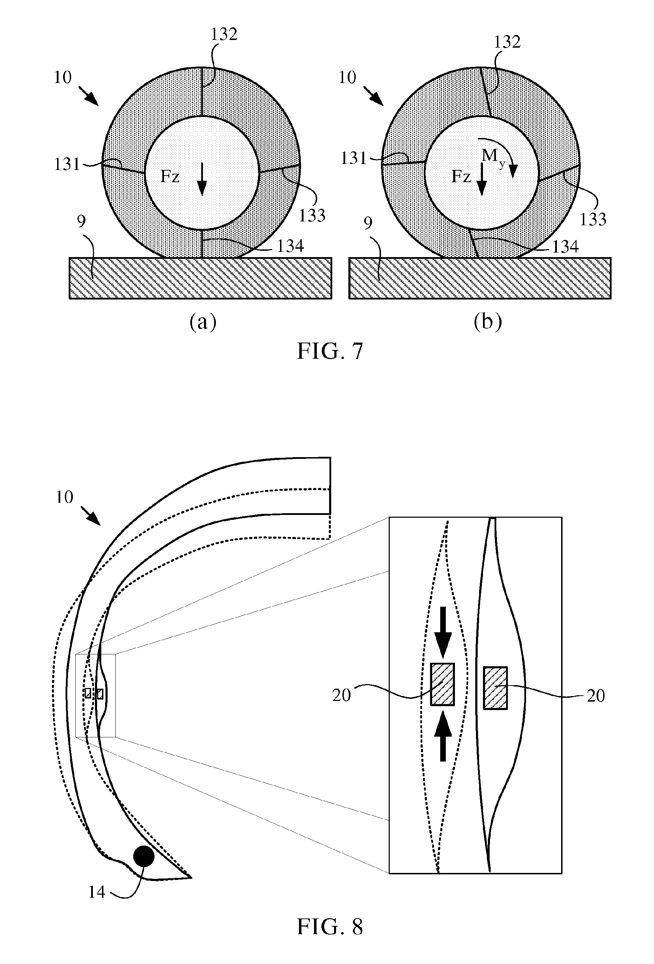

La figure 7 représente schématiquement un pneumatique 10 en contact avec le sol 9 et soumis à deux types de sollicitations. La figure 7(a) représente la déradialisation du pneumatique 10 causée par l'effet d'une charge Fz portée par ce pneumatique 10 lorsque le pneumatique est à l'arrêt. Des quatre fils 131 à 134 qui sont représentés, seuls les fils 131 et 133 subissent une déradialisation lorsque la force Fz est appliquée ; les fils 132 et 134 restent orientés radialement. A la figure 7(b), le pneumatique 10 est de surcroît soumis à un couple moteur M_{y}, ce qui modifie la déradialisation : aucun des fils 131 à 134 ne conserve une orientation radiale. Signalons que l'inclinaison des fils par rapport à la position radiale n'est pas identique pour tous les fils : la déradialisation causée par le couple moteur M_{y} peut s'ajouter à la déradialisation causée par la force Fz (c'est le cas du fil 133, par exemple) ou avoir un signe opposé (comme c'est le cas pour le fil 131).

Le premier mode de réalisation préférentiel permet également de mesurer la flexion du flanc par l'intermédiaire de la contrainte normale (direction z, voir aussi Fig. 2) sur la membrane. Lorsque le pneumatique est chargé, le flanc fléchit dans la région correspondant à l'aire de contact. La figure 8 présente l'écart entre les deux situations. La situation initiale (traits pleins) non chargée est comparée à la situation chargée (pointillés). Dans la situation chargée, la déformation du flanc se traduit par une contrainte accrue (indiquée par les flèches) sur le capteur 20.

La connaissance de la déradialisation et la flexion du flanc du pneumatique 10 permet de déduire les efforts qui sont à l'origine des déformations globales du pneumatique. Plusieurs applications peuvent être envisagées ; il devient ainsi possible de déterminer la flèche du pneumatique (c'est-à-dire la variation de la hauteur radiale du pneumatique, lorsque celui-ci passe d'un état non chargé à un état chargé) ou son carrossage (c'est-à-dire l'inclinaison de l'axe de rotation du pneumatique par rapport à un plan parallèle au sol), ou encore le torseur des efforts centre roue, tel qu'expliqué dans le brevet US 6,962,075.

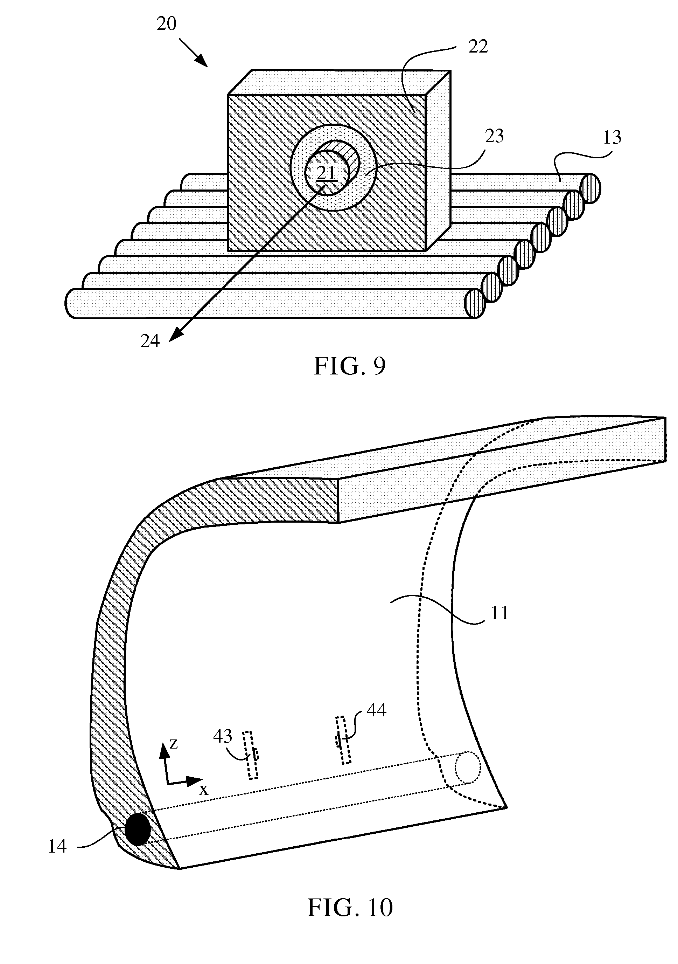

Dans un second mode de réalisation préférentiel, représenté schématiquement à la figure 9, le capteur 20 est placé sur le bourrelet ou sur le flanc du pneumatique et orienté de façon à ce que la normale au plan de la membrane (indiquée par la flèche 24) soit orientée perpendiculairement à la direction radiale (qui correspond à la direction des fils 13 de la nappe carcasse) et parallèlement à la surface de la nappe carcasse. De nouveau, deux positionnements, représentées à la figure 10, sont possibles et donnent des résultats comparables : la membrane peut être tournée dans le sens de roulage du pneumatique lorsque le véhicule avance (43) ou dans le sens contraire (44).

Ce mode de réalisation particulier permet principalement de mesurer la déradialisation du pneumatique 10 par l'intermédiaire du cisaillement xz (σ_{xz}), de manière comparable au premier mode de réalisation préférentiel, et l'extension circonférentielle du flanc, par l'intermédiaire de la contrainte normale (direction x) sur la membrane. Ces deux grandeurs offrent des informations sur les déformations globales du pneumatique et permettent, comme le premier mode de réalisation préférentiel, de mesurer la flèche et/ou le carrossage du pneumatique ainsi que le torseur des efforts centre roue tel qu'expliqué dans la demande de brevet US 2004/158,414.

Selon un troisième mode de réalisation préférentiel, le capteur est placé sous le sommet du pneumatique, de manière à ce que la normale à sa membrane soit orientée dans la direction circonférentielle, c'est-à-dire perpendiculaire à la direction des fils de la nappe carcasse et parallèle à la nappe. Ce mode de réalisation permet d'accéder à deux grandeurs intéressantes : le cisaillement xy sous le sommet et la compression dans la direction x.

La figure 11 représente ce troisième mode de réalisation dans une coupe radiale. Elle illustre l'évolution de la contrainte normale à la membrane du capteur 20. Le pneumatique 10 avance dans la direction signalée par la flèche 50. La figure montre le pneumatique à trois moments successifs. A la figure 11 (a), le capteur se trouve en dehors de la zone de contact entre le pneumatique 10 et le sol 9. Le rayon de courbure correspond au rayon intérieur du pneumatique. A la figure 11(b), le capteur entre dans la zone de contact ; il se trouve dans la zone de raccordement où le rayon de courbure du sommet du pneumatique 10 est plus petit. Par conséquent, la contrainte subie par la membrane du capteur 20 augmente. Enfin, à la figure 11(c), le capteur se trouve dans la zone de contact entre le pneumatique 10 et le sol 9. Le sommet est aplati, le rayon de courbure infini. La contrainte sur la membrane du capteur diminue et peut même changer de signe.

Les applications associées à ce mode de réalisation peuvent avoir pour objectif d'estimer la flèche du pneumatique en donnant une évaluation de la longueur de l'aire de contact grâce au signal de compression dans la direction circonférentielle.

Selon un quatrième mode de réalisation préférentiel, le capteur est placé de manière à ce que sa membrane soit parallèle à la nappe carcasse et la gomme intérieure. Dans cette position, qu'il soit positionné en zone basse, dans les flancs ou sous le sommet, il permet la lecture par la contrainte normale d'une valeur représentative de la pression de gonflage du pneumatique.

## Revendications

1. - Pneumatique (10) comportant une gomme intérieure (11), au moins une nappe carcasse (12) et un capteur de contraintes (20), le pneumatique étant **caractérisé en ce que** le capteur de contraintes est placé entre la nappe carcasse et la gomme intérieure.

2. - Pneumatique (10) selon la revendication 1, dans lequel le capteur de contraintes (20) comprend une tige (21) rigide reliée à une membrane (23) sensiblement plane et déformable, la membrane comportant des moyens de détection d'une déformation de la membrane, la tige étant couplée mécaniquement à la nappe carcasse (12) et/ou à la gomme intérieure (11) du pneumatique.

3. - Pneumatique (10) selon la revendication 2, dans lequel le couplage mécanique est réalisé par l'intermédiaire d'une quantité de matériau (30) qui comble l'espace entre la nappe carcasse (12), la gomme intérieure (11) et le capteur (20).

4. - Pneumatique (10) selon la revendication 3, dans lequel le matériau (30) qui comble l'espace entre la nappe carcasse (12), la gomme intérieure (11) et le capteur (20) est un matériau caoutchouteux.

5. - Pneumatique (10) selon la revendication 3 ou 4, dans lequel le matériau (30) qui comble l'espace entre la nappe carcasse (12), la gomme intérieure (11) et le capteur (20) a une rigidité entre 2 et 15 MPa pour 10 % d'allongement.

6. - Pneumatique (10) selon la revendication 3 ou 4, dans lequel le matériau (30) qui comble l'espace entre la nappe carcasse (12), la gomme intérieure (11) et le capteur (20) présente un gradient de rigidité, les zones proches de la gomme intérieure et de la nappe carcasse ayant une rigidité intermédiaire entre la rigidité de la gomme intérieure et la rigidité de la nappe carcasse et la rigidité du matériau dans les zones proches du capteur ayant une rigidité supérieure à la rigidité de la gomme intérieure et à la rigidité de la nappe carcasse.

7. - Pneumatique (10) selon l'une quelconque des revendications 2 à 6, dans lequel la normale (24) à la membrane (23) du capteur (20) est parallèle au plan de la nappe carcasse (12).

8. - Pneumatique (10) selon la revendication 7, dans lequel la normale (24) au plan de la membrane (23) du capteur (20) soit orientée de façon parallèle à une direction comprise dans un plan comprenant l'axe de rotation du pneumatique.

9. - Pneumatique (10) selon la revendication 7, dans lequel la normale (24) au plan de la membrane (23) du capteur (20) soit orientée de façon perpendiculaire à une direction comprise dans un plan comprenant l'axe de rotation du pneumatique.

10. - Pneumatique (10) selon la revendication 8 ou 9, dans lequel le capteur (20) est placé dans une zone de bourrelet ou sur un flanc du pneumatique.

11. **-** Pneumatique (10) selon la revendication 7, dans lequel le capteur (20) est placé sous le sommet du pneumatique et la normale (24) au plan de la membrane (23) du capteur est orientée dans la direction circonférentielle du pneumatique.

12. - Pneumatique (10) l'une quelconque des revendications 2 à 6, dans lequel la membrane (23) du capteur (20) est parallèle à la nappe carcasse (12) et à la gomme intérieure (11).
